# FASCICULE DE BREVET EUROPEEN

(11) **EP 0 369 979 B1**
(45) Date de publication et mention de la délivrance du brevet: **21.04.1993**
(21) Numéro de dépôt: 89870178.4
(22) Date de dépôt: 10.11.1989
(51) Int. Cl.: C01B 13/32, C01G 25/02

(54) **Procédé pour la fabrication d'une poudre comprenant au moins un oxyde métallique**
Verfahren zur Herstellung eines wenigstens ein Metalloxid enthaltendes Pulvers
Process for preparing a powder containing at least one metal oxide

(30) Priorité: 18.11.1988 FR 8815228
(43) Date de publication de la demande: 23.05.1990
(73) Titulaire: SOLVAY, B-1050 Bruxelles (BE)
(72) Inventeur: Lerot, Luc, B-1200 Bruxelles (BE); Wautier, Henri, B-7490 Brane-le-Comte (BE); Legrand, Franz, B-7300 Quaregnon (BE)
(74) Mandataire: Anthoine, Paul

(56) Documents cités:
- EP-A- 0 238 103
- EP-A- 0 263 544

## Description

L'invention a pour objet un procédé pour la fabrication de poudres d'oxydes métalliques.

Elle concerne plus particulièrement un procédé pour fabriquer une poudre comprenant au moins un oxyde métallique, au départ d'un composé métallique chloré.

On connaît des procédés pour la fabrication de poudres d'oxydes métalliques utilisant comme matières premières un alcoolate métallique et de l'eau (demandes de brevets européens EP-A-0238103 et EP-A-0263544 au nom de SOLVAY). Le premier de ces procédés (EP-A-0238103) consiste à hydrolyser l'alcoolate métallique au moyen d'une solution organique d'eau en présence d'un composé organique acide contenant plus de six atomes de carbone dans sa molécule. La deuxième (EP-A-0263544) est un perfectionnement du premier procédé et consiste à opérer l'hydrolyse en deux temps séparés par une période de mûrissage, la quantité totale d'eau utilisée étant telle que le rapport molaire de cette quantité d'eau à la quantité d'alcoolate métallique mise en oeuvre soit compris entre 0,5 et 0,9 fois la valence du métal de l'alcoolate métallique.

Dans un autre procédé connu pour fabriquer une poudre d'oxyde métallique, on fait réagir un chlorure métallique avec un alcool et de l'ammoniac pour former un alcoolate métallique et du chlorure d'ammonium, on sépare le chlorure d'ammonium qui précipite, et on traite ensuite l'alcoolate métallique avec de l'eau, pour hydrolyser l'alcoolate et précipiter l'oxyde métallique (Journal of The American Ceramic Society, Vol. 48, No. 7, MAZDIYASNI ET AL "Preparation of Ultra-High-Purity Submicron Refractory Oxides", pages 372 à 375). Ce procédé connu implique une filtration pour séparer le précipité de chlorure d'ammonium, de la solution organique contenant l'alcoolate métallique. La filtration est un inconvénient de ce procédé connu : d'une part, elle allonge la durée totale du procédé; d'autre part, elle est impuissante à éviter la présence de chlorure d'ammonium dans la solution de l'alcoolate métallique. La présence de chlorure d'ammonium dans la solution organique d'alcoolate métallique constitue un désavantage, car ce composé va exercer une action défavorable sur l'étape ultérieure d'hydrolyse et va par ailleurs contaminer la poudre d'oxyde métallique.

L'invention remédie à cet inconvénient du procédé connu, en fournissant un procédé nouveau qui permet d'obtenir une poudre d'oxyde métallique de grande pureté, au départ d'un composé métallique chloré, ce procédé ne nécessitant pas une étape intermédiaire de filtration.

L'invention concerne dès lors un procédé pour la fabrication d'une poudre comprenant au moins un oxyde métallique, selon lequel on fait réagir un composé métallique chloré anhydre avec un alcool et on traite l'alcoolate métallique résultant avec de l'eau pour hydrolyser l'alcoolate et précipiter l'oxyde métallique; selon l'invention, on dissout le composé métallique chloré anhydre dans l'alcool auquel on ajoute un époxyde, on ajoute ensuite l'eau au milieu réactionnel résultant en réalisant un mélange homogène avant que ne débute la nucléation, et on recueille ensuite l'oxyde métallique qui précipite.

On entend désigner par composé métallique chloré, un composé dans lequel un métal au moins est associé à au moins un cation chlorure. Cette définition inclut dès lors non seulement les chlorures métalliques tels quels ne contenant que des anions métalliques et des cations chlorure, mais aussi les composés métalliques chlorés comprenant en outre, dans la molécule, d'autres cations et/ou des groupements hydrocarbonés. Des exemples de composés métalliques chlorés entrant dans le cadre de l'invention sont les chlorures métalliques tels quels et les chloroalcoxydes métalliques.

Dans le procédé selon l'invention, le composé métallique chloré que l'on fait réagir avec l'alcool doit être anhydre.

Le terme alcool doit être pris dans une acceptation tout à fait générale et inclure les alcools aliphatiques linéaires, cycliques, saturés, insaturés, non substitués et substitués totalement ou partiellement, ainsi que les phénols non substitués ou substitués au moins partiellement. On choisit de préférence un alcool dont le pKa est supérieur à 15,74, qui est la valeur généralement admise pour le pKa de l'eau pure (W. HUBER - "Titration in nonaqueous solvents" - 1967 - Academic Press. - page 220, tableau 1.9). Des alcools préférés sont ceux dont le pKa est au moins égal à 16, particulièrement les alcools aliphatiques saturés non substitués tels que, par exemple, l'éthanol, le n-propanol, l'isopropanol, le n-butanol et l'isobutanol.

Selon l'invention, on dissout le composé métallique chloré anhydre dans l'alcool, en présence d'un époxyde. L'époxyde peut invariablement être mélangé à l'alcool, au composé métallique chloré anhydre, ou à la solution de ce composé dans l'alcool. En présence de l'époxyde, le composé métallique chloré est converti en alcoolate métallique et le chlorure d'hydrogène libéré est capté par l'époxyde pour former de la chlorhydrine du glycol correspondant, par exemple selon la réaction générale suivante dans le cas d'un chlorure métallique tel quel : 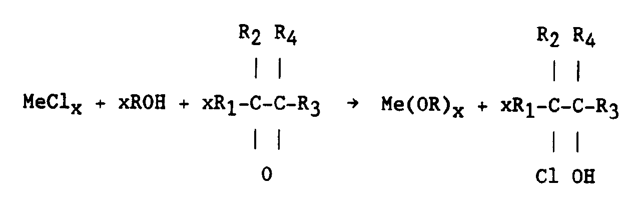
dans laquelle:
- Me désigne un métal de valence x;
- R désigne un groupement hydrocarboné conforme à la définition donnée plus haut du terme "alcool";
- R₁, R₂, R₃, R₄ désignent chacun un atome d'hydrogène ou un groupement hydrocarboné saturé ou insaturé, éventuellement substitué partiellement ou totalement.

L'alcool, le composé métallique chloré anhydre et l'époxyde doivent dès lors être mis en oeuvre en quantités respectives au moins suffisantes pour réaliser une conversion de la totalité du composé métallique chloré en l'alcoolate correspondant à l'alcool mis en oeuvre.

Le choix de l'époxyde est dicté par la nécessité qu'à l'issue de la réaction, l'alcoolate métallique se retrouve totalement dissous dans la chlorhydrine du glycol produite ou dans la solution de celle-ci avec l'alcool lorsque l'on met en oeuvre un excès d'alcool. Le choix de l'époxyde va dès lors dépendre des conditions opératoires, notamment de la pression et de la température, ainsi que du composé métallique chloré anhydre et de l'alcool mis en oeuvre et des quantités respectives mises à réagir. En pratique, on préfère travailler au voisinage de la température ambiante (se situant généralement entre 15 et 25°C) et de la pression atmosphérique normale, avec des époxydes aliphatiques, substitués ou non substitués. Les époxydes aliphatiques non substitués sont préférés et, parmi ceux-ci, l'époxypropane est spécialement avantageux.

Selon l'invention, on recueille la solution organique de l'alcoolate produite et on y ajoute de l'eau pour hydrolyser l'alcoolate.

L'hydrolyse des alcoolates métalliques est une technique bien connue pour la production de poudres d'oxydes métalliques (Better Ceramics Through Chemistry - Materials Research Society Symposia Proceedings - Vol. 32 - 1984 - Elsevier Science Publishing Co., Inc. - BRUCE FEGLEY et al. : "Synthesis, characterization and processing of monosized ceramic powders", pages 187 à 197; brevet US-A-4543341).

Dans le procédé selon l'invention, l'hydrolyse peut être effectuée dans l'air ambiant. Toutefois, pour éviter une décomposition incontrôlée de l'alcoolate métallique, il est souhaitable que l'hydrolyse soit exécutée sous une atmosphère gazeuse exempte d'humidité. L'air sec, déshydraté, l'azote et l'argon sont des exemples d'atmosphères utilisables dans le procédé selon l'invention. En principe, la température et la pression ne sont pas critiques. En général, dans la majorité des cas, on peut travailler à la température ambiante et la pression atmosphérique normale.

Dans l'exécution du procédé selon l'invention, l'hydrolyse est réglée pour précipiter l'oxyde métallique hydraté à l'état d'une poudre, sans former de gel. Dans ce but, il est recommandé de réaliser un mélange homogène de l'alcoolate métallique et de l'eau, le plus rapidement possible, avant que débute la nucléation. A cet effet, dans une forme d'exécution préférée du procédé selon l'invention, l'eau est mise en oeuvre à l'état d'une solution organique. Les alcools et leurs dérivés conviennent bien, notamment le méthanol, l'éthanol, le n-propanol, l'isopropanol, le n-butanol et l'isobutanol. Le taux de dilution optimum de l'eau dans son solvant organique dépend de divers facteurs, notamment de l'alcoolate métallique, de la température de travail et de la qualité recherchée pour la poudre amorphe; ils doivent être déterminés dans chaque cas particulier par un travail de routine au laboratoire. En règle générale, on recommande que la solution organique d'eau contienne moins de 5 moles d'eau par litre. Des concentrations molaires spécialement avantageuses sont celles comprises entre 0,1 et 3. Il est par ailleurs spécialement avantageux d'exécuter l'hydrolyse en présence d'un composé organique acide contenant plus de six atomes de carbone dans sa molécule, comme exposé de manière détaillée dans les demandes de brevet belge 08700311 et français 8709116 (SOLVAY & Cie). Pour opérer le mélange de l'eau, de la solution organique de l'alcoolate et, le cas échéant, du composé organique acide, on peut opérer de la manière décrite dans la demande de brevet GB-A-2168334.

A l'issue de la réaction d'hydrolyse, on recueille une poudre de fines particules constituées d'un mélange complexe d'oxyde métallique hydraté, à l'état amorphe, et de résidus organiques. La poudre est formée, pour l'essentiel, de particules généralement sphériques, présentant un diamètre n'excédant pas 5 micromètres, habituellement compris entre 0,05 et 2 micromètres. Les résidus organiques présents dans la poudre amorphe comprennent la chlorhydrine formée, éventuellement des résidus de l'époxyde et des alcools utilisés et, le cas échéant, les solvants organiques et le composé organique acide mis en oeuvre à l'étape d'hydrolyse. Ces résidus sont présents dans la poudre en quantités très variables, dépendant des conditions de l'hydrolyse. Leur teneur pondérale dans la poudre peut excéder 50 %, voire 60 %, mais elle est plus généralement comprise entre 10 et 40 %.

La poudre recueillie à l'issue de l'hydrolyse est avantageusement soumise à un séchage pour éliminer l'eau et les résidus organiques. Le séchage peut être suivi d'un traitement thermique approprié pour cristalliser l'oxyde métallique. Le cas échéant, on peut opérer de la manière exposée dans la demande de brevet belge 08800674 (SOLVAY & Cie).

Comme il est exposé plus haut, il est impératif, dans l'exécution du procédé selon l'invention, que le composé métallique chloré que l'on met à réagir avec l'alcool soit anhydre. Dans le cas d'un composé métallique humide ou hydraté, celui-ci doit dès lors être au préalable séché ou déshydraté avant d'être traité avec l'alcool. A cet effet, dans une forme d'exécution particulière du procédé selon l'invention, le composé métallique chloré anhydre mis en oeuvre provient d'un composé métallique chloré hydraté qui est au préalable soumis au traitement suivant : on dissout d'abord le composé métallique chloré hydraté dans un solvant organique ayant un pKa inférieur à 15,74 et présentant une température d'ébullition supérieure à celle de l'eau ou formant avec l'eau un azéotrope à minimum, puis on traite la solution résultante pour successivement distiller l'eau ou l'azéotrope et évaporer le solvant organique. Dans cette forme d'exécution du procédé selon l'invention, le solvant organique du composé métallique chloré hydraté est avantageusement choisi parmi les alcools dont le pKa n'excède pas 15,25 et est de préférence compris entre 12 et 15. Nonobstant les conditions qui précèdent, tous les alcools peuvent convenir pour dissoudre le composé métallique chloré hydraté. Dans le cadre de l'invention, il convient de conférer au terme alcool une acceptation tout à fait générale et y inclure les phénols (non substitués et substitués partiellement ou totalement), aussi bien que les alcools aliphatiques linéaires, cycliques, saturés, insaturés, non substitués et substitués partiellement ou totalement. Les alcools aliphatiques sont spécialement recommandés, tels que, par exemple, les trifluoroéthanols. Des alcools avantageux, dans le cadre de cette forme de réalisation de l'invention, sont ceux de formule générale:

R' - O - R''OH

dans laquelle R' et R'' désignent des groupements hydrocarbonés. Les alkoxyalcools sont spécialement recommandés, tels que, par exemple, les méthoxyéthanols. Cette forme d'exécution du procédé selon l'invention s'applique notamment aux oxychlorures métalliques hydratés.

Le procédé selon l'invention s'applique à la production de poudres de tous métaux au départ de composés chlorés de ceux-ci. Il s'applique indifféremment à la production de poudres d'oxydes métalliques isolés ou de poudres d'oxydes métalliques mixtes. Il est spécialement adapté à la production de poudres d'oxydes métalliques, destinées à la mise en oeuvre de matériaux céramiques qui, par définition, sont des matériaux inorganiques non métalliques, dont la mise en oeuvre au départ d'une poudre requiert des traitements à haute température, tels que des traitements de fusion ou de frittage (P. William Lee - "Ceramics" - 1961 - Reinhold Publishing Corp. - page 1; Kirk Othmer Encyclopedia of Chemical Technology - Third edition - Volume 5 - 1979, John Wiley & Sons, USA - pages 234 à 236 : "Ceramics, scope"). Le procédé selon l'invention trouve notamment une application intéressante pour la fabrication de poudres d'oxydes de métaux appartenant aux groupes 2, 3 et 4 du tableau périodique des éléments, éventuellement associés à des oxydes d'éléments appartenant au groupe des terres rares, notamment des cristaux d'oxyde de zirconium seul ou associé à des substances susceptibles de stabiliser sa forme allotropique tétragonale ou sa forme allotropique cubique aux basses températures (spécialement à la température ambiante). Il s'applique notamment à la fabrication de poudres de zircone stabilisée, comprenant des cristaux d'oxydes mixtes de zirconium et d'yttrium ou des cristaux d'oxydes mixtes de zirconium et de mischmétal.

L'invention concerne dès lors aussi des poudres d'oxydes métalliques obtenues au moyen du procédé selon l'invention. Elle concerne spécialement des poudres d'oxyde de zirconium obtenues au moyen dudit procédé, qui sont formées de grains sphériques dont le diamètre est compris entre 0,05 et 2 micromètres.

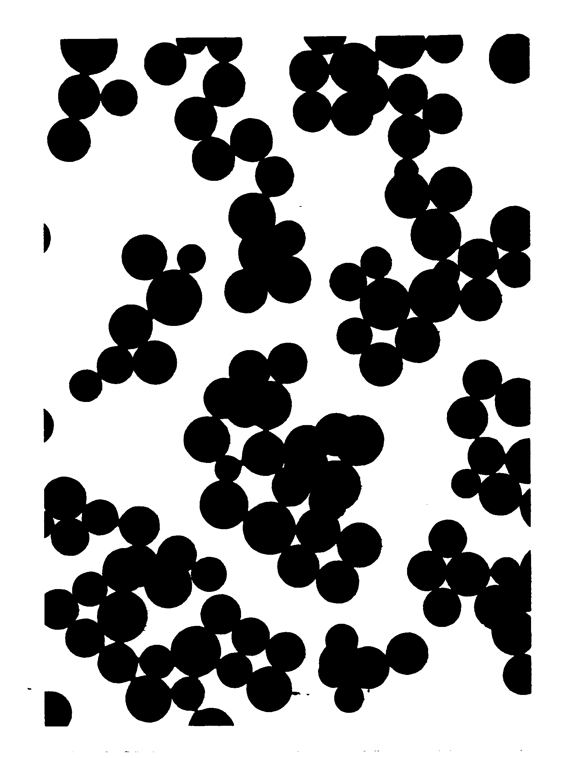

L'invention est explicitée ci-dessous, dans une forme d'exécution particulière appliquée à la fabrication d'une poudre d'oxyde de zirconium, en référence à la figure unique du dessin annexé, qui est une reproduction photographique d'une poudre d'oxyde de zirconium conforme à l'invention, au grossissement 20.000 X.

Dans une enceinte maintenue sous atmosphère d'azote exempte d'humidité, on a procédé aux opérations successives suivantes:
- on a dissous de l'oxychlorure de zirconium octahydraté (ZrOCl₂.8H₂O) dans du méthoxy-2-éthanol-1 (pKa 14,80) à 60°C, en quantités respectives réglées pour former une solution de 0,15 mole d'oxychlorure de zirconium par litre;
- on a mis l'enceinte en dépression contrôlée, de manière à évaporer successivement l'azéotrope du mélange binaire eau/méthoxy-2-éthanol-1 et le solvant organique; à l'issue de l'évaporation, on a retrouvé dans l'enceinte un sel de zirconium à l'état essentiellement anhydre;
- on a introduit dans l'enceinte du n-propanol (pKa = 19,33) en quantité réglée pour que la solution résultante contienne 0,2 mole de zirconium par litre, et on a laissé refroidir la solution jusqu'à environ 25°C;
- on a introduit dans l'enceinte successivement de l'époxypropane à raison de 2 moles par mole de zirconium et de la triéthylamine à raison de 0,04 mole par mole de zirconium, et on a laissé réagir le milieu réactionnel, pour obtenir une solution organique comprenant du propanolate de zirconium;
- on a filtré la solution pour éliminer toute trace de matière solide et on l'a maintenue dans l'enceinte, à l'abri de l'humidité.

Parallèlement à la préparation de la solution organique de propanolate de zirconium, on a préparé un volume identique d'une autre solution organique, en dissolvant de l'eau et de l'acide oléique dans du n-propanol. L'eau et l'acide oléique ont été mis en oeuvre en des quantités correspondant à des rapports molaires H₂O:Zr = 3,5 et acide oléique:Zr = 0,32.

La solution organique précitée de propanolate de zirconium étant maintenue dans l'enceinte sous atmosphère d'azote anhydre à 25°C, on l'a soumise à une agitation intense et on y a ajouté en une fois la solution propanolique d'eau et d'acide oléique. L'agitation a été réglée de manière à obtenir un mélange réactionnel homogène avant que débute une nucléation d'oxyde de zirconium. On a ensuite fait subir au mélange réactionnel un mûrissage d'environ 2 heures, sous agitation modérée. A l'issue du mûrissage, on a soumis le mélange réactionnel à une centrifugation et on a recueilli une poudre que l'on a lavée avec de l'alcool anhydre, puis séchée au moyen d'un courant d'air anhydre, à la température ambiante. La figure montre un échantillon de la poudre recueillie à l'issue du séchage. Celle-ci s'est révélée être constituée de particules sensiblement sphériques d'oxyde de zirconium hydraté amorphe, de diamètre moyen égal à 0,5 micromètre.

## Revendications

1. Procédé pour la fabrication d'une poudre comprenant au moins un oxyde métallique, selon lequel on fait réagir un composé métallique chloré anhydre avec un alcool et on traite l'alcoolate métallique résultant avec de l'eau pour hydrolyser l'alcoolate et précipiter l'oxyde métallique, caractérisé en ce qu'on dissout le composé métallique chloré anhydre dans l'alcool auquel on ajoute un époxyde, on ajoute ensuite l'eau au milieu réactionnel résultant en réalisant un mélange homogène avant que ne débute la nucléation, et on recueille ensuite l'oxyde métallique qui précipite.

2. Procédé selon la revendication 1, caractérisé en ce qu'on sélectionne un alcool dont le pKa est supérieur à 15,74.

3. Procédé selon la revendication 1 ou 2, caractérisé en ce qu'on sélectionne l'époxyde parmi les époxydes aliphatiques substitués ou non substitués.

4. Procédé selon la revendication 3, caractérisé en ce que l'époxyde comprend de l'époxypropane.

5. Procédé selon l'une quelconque des revendications 2 à 4, caractérisé en ce qu'on sélectionne l'alcool parmi les alcools aliphatiques saturés, non substitués.

6. Procédé selon l'une quelconque des revendications 1 à 5, caractérisé en ce qu'on met en oeuvre un composé métallique chloré anhydre obtenu en dissolvant un composé métallique chloré hydraté dans un solvant organique dont le pKa est inférieur à 15,74 et qui présente un point d'ébullition supérieur à celui de l'eau ou forme avec l'eau un azéotrope à minimum, et en chauffant ensuite la solution résultante pour successivement distiller l'eau ou l'azéotrope et évaporer le solvant organique.

7. Procédé selon la revendication 6, caractérisé en ce qu'on sélectionne le solvant dont le pKa est inférieur à 15,74 parmi les alcools ayant un pKa compris entre 12 et 15.

8. Procédé selon la revendication 7, caractérisé en ce qu'on sélectionne le solvant de pKa inférieur à 15,74 parmi les alkoxyalcools.

9. Procédé selon l'une quelconque des revendications 1 à 8, caractérisé en ce que l'hydrolyse de l'alcoolate est opérée en présence d'un composé organique acide contenant plus de six atomes de carbone dans sa molécule.

10. Procédé selon l'une quelconque des revendications 1 à 9, caractérisé en ce que l'eau est mise en oeuvre à l'état d'une solution alcoolique contenant entre 0,1 et 3 moles d'eau par litre.

11. Procédé selon l'une quelconque des revendications 1 à 10, caractérisé en ce qu'on sélectionne le composé métallique chloré parmi ceux des métaux des groupes 2, 3 et 4 du tableau périodique des éléments.

12. Procédé selon l'une quelconque des revendications 6 à 11, caractérisé en ce qu'on met en oeuvre, pour le composé métallique chloré hydraté, de l'oxychlorure de zirconium hydraté.

## Patentansprüche

1. Verfahren zur Herstellung eines wenigstens ein Metalloxid enthaltenden Pulvers, wonach man eine wasserfreie chlorierte Metallverbindung mit einem Alkohol reagieren läßt und das entstehende Metallalkoholat mit Wasser behandelt, um das Alkoholat zu hydrolysieren und das Metalloxid auszufällen, **dadurch gekennzeichnet,** daß man die wasserfreie chlorierte Metallverbindung in dem Alkohol, dem man ein Epoxid zusetzt, löst, dann dem entstehenden Reaktionsmedium Wasser zusetzt, wobei eine homogene Mischung entsteht, bevor das Zusammenschießen zu Kristallen beginnt, und daß man anschließend das Metalloxid, das ausfällt, gewinnt.

2. Verfahren nach Anspruch 1, **dadurch gekennzeichnet,** daß man einen Alkohol auswählt, dessen pKa höher als 15,74 ist.

3. Verfahren nach Anspruch 1 oder 2, **dadurch gekennzeichnet**, daß man das Epoxid aus substituierten oder nicht substituierten aliphatischen Epoxiden auswählt.

4. Verfahren nach Anspruch 3, **dadurch gekennzeichnet,** daß das Epoxid Epoxypropan ist.

5. Verfahren nach einem der Ansprüche 2 bis 4, **dadurch gekennzeichnet,** daß man den Alkohol aus gesättigten aliphatischen, nicht substituierten Alkoholen auswählt.

6. Verfahren nach einem der Ansprüche 1 bis 5, **dadurch gekennzeichnet,** daß man eine wasserfreie chlorierte Metallverbindung einsetzt, die erhalten wurde, indem man eine wasserhaltige chlorierte Metallverbindung in einem organischen Lösungsmittel löst, dessen pKa kleiner als 15,74 ist und das einen Siedepunkt aufweist, der höher ist, als der Siedepunkt von Wasser oder das mit Wasser zumindest ein Azeotrop bildet, und daß man anschließend die entstehende Lösung erhitzt, um nach und nach das Wasser oder das Azeotrop abzudestillieren und das organische Lösungsmittel zu verdampfen.

7. Verfahren nach Anspruch 6, **dadurch gekennzeichnet**, daß man das Lösungsmittel, dessen pKa kleiner als 15,74 ist, aus Alkoholen mit einem pKa von 12 bis 15 auswählt.

8. Verfahren nach Anspruch 7, **dadurch gekennzeichnet,** daß man das Lösungsmittel mit einem pKa von weniger als 15,74 aus Alkoxyalkoholen auswählt.

9. Verfahren nach einem der Ansprüche 1 bis 8, **dadurch gekennzeichnet,** daß man die Hydrolyse des Alkoholats in Gegenwart einer sauren organischen Verbindung, die mehr als 6 Kohlenstoffatome im Molekül enthält, durchführt.

10. Verfahren nach einem der Ansprüche 1 bis 9, **dadurch gekennzeichnet,** daß das Wasser in Form einer alkoholischen Lösung, die 0,1 bis 3 Mol Wasser pro Liter enthält, eingesetzt wird.

11. Verfahren nach einem der Ansprüche 1 bis 10, **dadurch gekennzeichnet,** daß man die chlorierte Metallverbindung auswählt aus Verbindungen der Metalle der Gruppen 2, 3 und 4 des Periodensystems der Elemente.

12. Verfahren nach einem der Ansprüche 6 bis 11, **dadurch gekennzeichnet,** daß man als wasserhaltige chlorierte Metallverbindung wasserhaltiges Zirconiumoxychlorid verwendet.

## Claims

1. Process for the manufacture of a powder containing at least one metal oxide, according to which an anhydrous chlorinated metal compound is reacted with an alcohol and the resulting metal alcoholate is treated with water to hydrolyse the alcoholate and precipitate the metal oxide, characterised in that the anhydrous chlorinated metal compound is dissolved in the alcohol to which an epoxide is added, water is then added to the resulting reaction mixture, a homogeneous mixture being produced before nucleation commences, and the metal oxide which precipitates is then collected.

2. Process according to Claim 1, characterised in that an alcohol whose pKₐ is higher than 15.74 is selected.

3. Process according to Claim 1 or 2, characterised in that the epoxide is selected from substituted or unsubstituted aliphatic epoxides.

4. Process according to Claim 3, characterised in that the epoxide includes epoxypropane.

5. Process according to any one of Claims 2 to 4, characterised in that the alcohol is selected from unsubstituted saturated aliphatic alcohols.

6. Process according to any one of Claims 1 to 5, characterised in that an anhydrous chlorinated metal is used, obtained by dissolving a hydrated chlorinated metal compound in an organic solvent whose pKₐ is lower than 15.74 and which has a boiling point higher than that of water or forms a minimum azeotrope with water, and by then heating the resulting solution to distil off the water or the azeotrope in succession and to evaporate off the organic solvent.

7. Process according to Claim 6, characterised in that the solvent whose pKₐ is lower than 15.74 is selected from alcohols which have a pKₐ of between 12 and 15.

8. Process according to Claim 7, characterised in that the solvent of pKₐ lower than 15.74 is selected from alkoxyalcohols.

9. Process according to any one of Claims 1 to 8, characterised in that the hydrolysis of the alcoholate is carried out in the presence of an acidic organic compound containing more than six carbon atoms in its molecule.

10. Process according to any one of Claims 1 to 9, characterised in that the water is used in the form of an alcoholic solution containing between 0.1 and 3 moles of water per litre.

11. Process according to any one of Claims 1 to 10, characterised in that the chlorinated metal compound is selected from those of the metals of groups 2, 3 and 4 of the Periodic Table of the elements.

12. Process according to any one of Claims 6 to 11, characterised in that hydrated zirconium oxychloride is used as the hydrated chlorinated metal compound.
